# FASCICULE DE BREVET EUROPEEN

(11) **EP 0 814 441 B1**
(45) Date de publication et mention de la délivrance du brevet: **02.05.2002**
(21) Numéro de dépôt: 97401416.9
(22) Date de dépôt: 19.06.1997
(51) Int. Cl.: G07F 7/08

(54) **Procédé de prise en compte d'une demande d'utilisation d'une carte prépayée virtuelle permettant la réutilisation de son numéro de série**
Verfahren zum Berücksichtigen einer Gebrauchsanforderung für eine vorausbezahlte virtuelle Karte, die die Wiederverwendung ihrer Seriennummer erlaubt
Method for taking into account a request for the use of a prepaid virtual card, allowing the reuse of its serial number

(30) Priorité: 21.06.1996 FR 9607762
(43) Date de publication de la demande: 29.12.1997
(73) Titulaire: FRANCE TELECOM, 75015 Paris (FR)
(72) Inventeur: Arditti, David, 92140 Clamart (FR); Boulot, Olivier, 78000 Versailles (FR); Campana, Mireille, 92140 Clamart (FR); Milano, Sophie, 75015 Paris (FR)
(74) Mandataire: Dubois-Chabert, Guy

(56) Documents cités:
- EP-A- 0 224 147
- EP-A- 0 429 176
- EP-A- 0 671 712
- WO-A-94/16415
- WO-A-95/34161
- DE-A- 3 432 557
- DE-A- 4 311 561
- FR-A- 2 685 520
- US-A- 4 725 719

## Description

### Domaine technique

La présente invention concerne un procédé de prise en compte d'une demande d'utilisation d'une carte prépayée virtuelle permettant la réutilisation de son numéro de série.

### Etat de la technique antérieure

### Généralités

Une carte prépayée permet à son porteur de recevoir un service de la part d'un fournisseur de service, le paiement de ce service étant réalisé par avance lors de l'achat de la carte.

On doit distinguer la carte prépayée virtuelle de la carte prépayée non virtuelle. Dans le premier cas, toutes les caractéristiques de la carte (en particulier son crédit) sont gérées par un serveur centralisé. Dans le second, c'est la carte elle-même qui contient ces informations. La Télécarte, qui est utilisée dans le réseau de publiphonie de France Telecom, est un exemple de carte prépayée non virtuelle.

L'invention ne concerne que les cartes prépayées virtuelles. A la différence des cartes prépayées non virtuelles, qui sont nécessairement constituées par un dispositif matériel, les cartes prépayées virtuelles peuvent être de deux sortes :
- les cartes prépayées virtuelles immatérielles, qui sont constituées d'un simple numéro ;
- les cartes prépayées virtuelles matérielles, qui sont constituées d'un dispositif physique, par exemple une carte téléphonique.

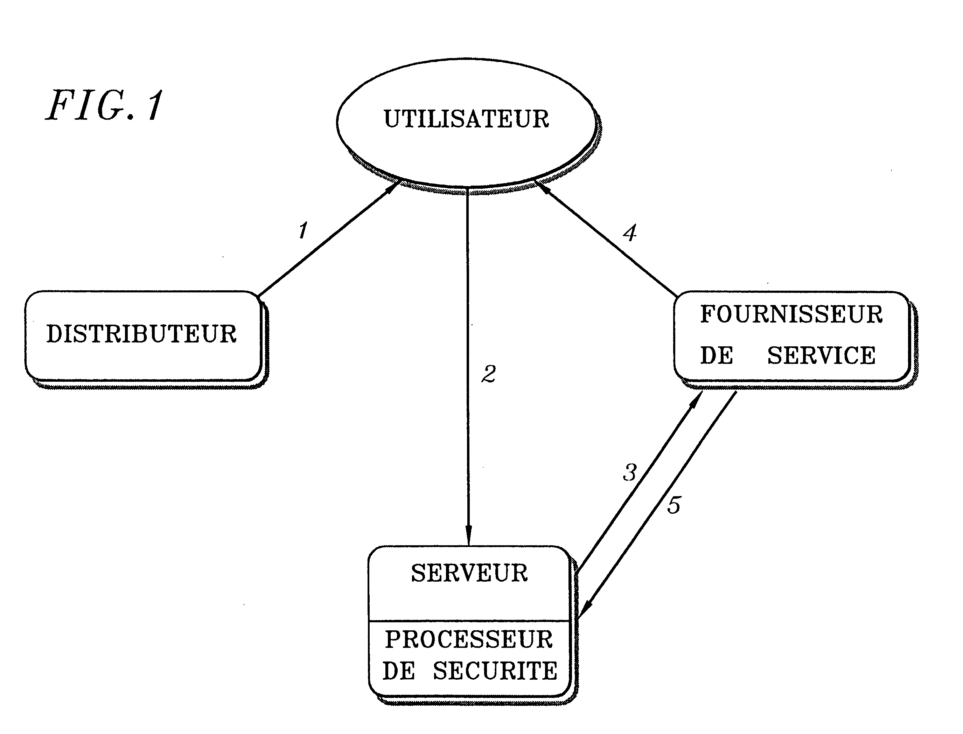

L'architecture d'un système fonctionnant sur le principe des cartes prépayées virtuelles est illustré sur la figure 1.

Sur cette figure on a les opérations suivantes :
1 : vente d'une carte prépayée virtuelle
2 : authentification de la carte prépayée virtuelle
3 : connaissance du crédit restant et des autres paramètres de la carte prépayée virtuelle
4 : fourniture d'un service
5 : dialogue permettant au fournisseur de service de mettre à jour le crédit de la carte prépayée virtuelle.

### Phase de la vie d'une carte prépayée

On distingue ainsi plusieurs phases dans la vie d'une carte prépayée virtuelle.

### • L'achat

L'utilisateur achète auprès d'un distributeur une carte prépayée virtuelle. Elle est initialement créditée d'un certain nombre d'unités, correspondant à son prix d'achat. Une unité permet de payer une part indivisible d'un service. Ce peut être de manière générale une unité monétaire, dans le cas d'une prestation téléphonique une taxe de base, ou une minute de communication ou bien toute autre fraction d'un service.

Dans certains cas le crédit d'un certain nombre d'unités peut être offert par un annonceur sous forme d'objet publicitaire.

La gestion de la carte prépayée virtuelle est réalisée par un serveur informatique dont le rôle est de tenir à jour le crédit de la carte ainsi que certaines données complémentaires (dates de validité, mise en opposition, etc....)

### • L'utilisation

Pour obtenir un service de la part du fournisseur de service, l'utilisateur doit d'abord prouver qu'il est en possession d'une carte prépayée virtuelle. Pour cela, le serveur authentifie la carte.

Cette fonction d'authentification consiste à vérifier la validité d'une séquence de symboles qui est transmise au serveur :
- pour les cartes prépayées virtuelles immatérielles, cette séquence est le numéro de la carte, ou tout autre identifiant fixe que le porteur communique au serveur ;
- pour les cartes prépayées virtuelles matérielles, à chaque activation par son porteur une séquence différente de symboles est calculée de manière cryptographique par le dispositif physique ; le dispositif peut la transmettre lui-même au serveur ou être capable seulement de la communiquer au porteur, qui la transmet lui-même ; ceci constitue une méthode d'authentification sûre ;
- on peut aussi imaginer, pour leur intérêt ergonomique, des cartes prépayées virtuelles matérielles qui émettent des séquences de symboles fixes. Ces cartes sont plus simples d'emploi que les cartes prépayées virtuelles immatérielles mais moins sûres que les cartes prépayées matérielles.

Si l'authentification de la carte prépayée virtuelle est réussie, le serveur indique au fournisseur de service le crédit restant sur la carte de l'utilisateur. Cette information peut, de manière optionnelle, être transmise à l'utilisateur.

Le fournisseur de service peut alors (en s'adressant au serveur) débiter le compte de l'utilisateur en fonction du service rendu. Ce débit peut être réalisé soit avant la fourniture du service, soit au fur et à mesure de la fourniture du service, soit une fois le service rendu, soit par une combinaison de ces divers procédés.

### • La fin de la carte prépayée virtuelle

La carte prépayée virtuelle devient inutilisable quand sa date de validité est dépassée ou quand son crédit est épuisé. On peut alors tenter de réutiliser le numéro de la carte prépayée virtuelle.

### Principes d'authentification

La séquence de symboles qui permet à l'utilisateur de s'authentifier s'appelle « séquence d'authentification ». Sa constitution dépend du type de carte prépayée virtuelle.

### • Cartes prépayées virtuelles immatérielles ou cartes prépayées virtuelles matérielles émettant des séquences fixes (cas 1 dans la suite)

La séquence d'authentification est constituée d'un « numéro de série » qui sert à repérer la carte dans la base de données du serveur et d'un « certificat » qui garantit l'authenticité de cette carte.

Dans certaines réalisations le certificat est calculé par application d'un « algorithme cryptographique » au numéro de série et à une clé secrète (dite « clé mère ») que le prestataire de service est seul à connaître.

### • Cartes prépayées virtuelles matérielles émettant des séquences différentes à chaque utilisation (cas 2 dans la suite)

La séquence d'authentification est constituée d'un « numéro de série » qui sert à repérer la carte dans la base de données du serveur et d'un « authentifiant », différent à chaque utilisation de la carte, qui garantit l'authenticité de celle-ci.

La carte prépayée virtuelle matérielle calcule l'authentifiant par application d'un « algorithme cryptographique » à un élément variable et à une clé secrète propre à la carte prépayée virtuelle matérielle appelée « clé fille ». L'élément variable est soit un compteur incrémenté à chaque utilisation de la carte, soit une quantité codant l'heure et la date.

La clé secrète propre à la carte prépayée virtuelle matérielle (clé fille) est introduite dans celle-ci par le prestataire de service, ou par quelqu'un en qui ce prestataire a confiance, au moment de la « personnalisation » de cette carte. Dans certaines réalisations la clé fille est calculé par application d'un « algorithme cryptographique » au numéro de série et à une clé secrète appelée « clé mère » que le prestataire de service est seul à connaître.

Cette dérivation clé mère → clé fille est appelée « diversification ».

### Dispositifs de l'art antérieur

Dans les dispositifs de l'art antérieur lorsque l'utilisateur désire bénéficier des possibilités de sa carte prépayée virtuelle, il doit communiquer la séquence d'authentification au serveur, par exemple au moyen d'un cadran ou d'un clavier téléphonique, à chaque demande de communication. Celle-ci ne doit donc pas être trop longue pour que la manipulation à faire par l'usager ne soit pas trop fastidieuse. Or le nombre de cartes prépayées est amené à augmenter rapidement : celles-ci pourront, en effet, être massivement distribuées en tant qu'objet promotionnel lié par exemple à un achat. A titre de comparaison, plusieurs dizaines de millions de Télécartes sont vendues chaque année.

La taille des numéros de série va donc augmenter en parallèle et l'utilisateur risque d'avoir à composer de plus en plus de chiffres à chaque demande de connexion, en plus du numéro du serveur et du numéro du demandé, ce qui sera fastidieux.

Parmi les publications de l'art antérieur, le document US-A-4 601 011 décrit des appareils permettant d'émettre des séquences d'authentification constituées d'un numéro de série et d'une séquence variable au cours du temps calculée par un procédé cryptographique. Aucun de ces documents ne décrit la réutilisation de numéros de série.

Le document WO-A-9 534 161 décrit un système dans lequel les cartes prépayées sont rechargeables.

La présente invention a pour objet de permettre une réutilisation des numéros de série de cartes prépayées associées à des crédits nuls ou des dates de validité dépassées, c'est-à-dire réutiliser les cartes vides ou périmées. Il ne s'agit pas de permettre une recharge des cartes prépayées, une carte vide restant définitivement périmée pour son utilisateur, mais de permettre l'attribution des numéros de celles-ci à de nouvelles cartes.

### Exposé de l'invention

La présente invention concerne un procédé de prise en compte d'une demande d'utilisation d'une carte prépayée virtuelle permettant la réutilisation des numéros de série, comportant les étapes suivantes :
- un utilisateur d'une carte prépayée se connecte à un serveur contenant une base de données des numéros de série, qui servent à repérer les cartes prépayées, des crédits restant à consommer et des dates de validité de ces cartes ;
- cet utilisateur s'authentifie auprès du serveur en lui communiquant une séquence d'authentification constituée :
   - soit (cas 1) d'un numéro de série et d'un certificat (cartes prépayées virtuelles immatérielles ou cartes prépayées virtuelles matérielles émettant des séquences fixes),
   - soit (cas 2) d'un numéro de série et d'un authentifiant (cartes prépayées virtuelles immatérielles émettant des séquences différentes à chaque utilisation) ;
- ce serveur fournit la séquence reçue à un processeur de sécurité ayant la capacité de vérifier la validité de cette séquence ;
- en cas de validité de cette séquence, ce processeur transmet au serveur une autorisation de consommer ;
- après réception de cette autorisation le serveur donne son accord à la demande d'utilisation dans la limite du crédit restant sur la carte et de la date de validité de celle-ci.

Ce procédé est caractérisé en ce que, lors d'une demande d'utilisation, ce serveur fournit au processeur de sécurité, en plus du certificat ou de l'authentifiant (séquence d'authentification), un numéro de version associé à chaque carte, qui est incrémenté lorsque la carte est vide ou périmée, et qui est stocké dans la base de données du serveur ; et, en ce que ce processeur recalcule le certificat ou l'authentifiant, qui est dépendant du numéro de version, avant de vérifier sa validité.

Bien qu'ayant le même numéro de série, l'ancienne carte prépayée virtuelle ne pourra donc plus être utilisée puisque son certificat (ou sa clé secrète) est différent du certificat (ou de la clé secrète) de la nouvelle carte prépayée virtuelle ; en effet, le numéro de version qui a changé intervient dans le calcul du certificat ou de la clé secrète.

Dans une application avantageuse la carte prépayée est une carte téléphonique prépayée, la demande d'utilisation étant alors celle d'une connexion téléphonique.

Le procédé de l'invention permet d'émettre, de façon sûre, une nouvelle carte correspondant à un numéro de série déjà attribué, et de pouvoir distinguer cette carte de la version précédente de celle-ci : sa séquence d'authentification est par construction différente de celle de la version précédente puisque leur numéro de version diffère.

La longueur de la séquence d'authentification dépend donc du nombre de cartes en cours de validité, et non du nombre total de cartes déjà émises. Le procédé de l'invention permet donc de maintenir constant ou dans des limites acceptables la taille de la séquence d'authentification.

### Brève description des dessins

- La figure 1 illustre schématiquement un système de communications, dans lequel peut être mis en oeuvre le procédé de l'invention ;
- la figure 2 illustre un exemple de fonctionnement du procédé de l'invention dans le réseau intelligent de France Télécom ;
- la figure 3 illustre la réutilisation d'une carte prépayée à séquence fixe conformément au procédé de l'invention ;
- les figures 4A et 4B illustrent le cas des cartes prépayées virtuelles matérielles émettant une séquence variable.

### Exposé détaillé de modes de réalisation

Dans le système représenté sur la figure 1, un terminal à la disposition de l'utilisateur peut être relié au serveur, par exemple par une liaison téléphonique, ce serveur pouvant lui-même communiquer avec le processeur de sécurité. Ce serveur contient une base de données des numéros de série des cartes prépayées, des crédits restant à consommer sur celles-ci, ainsi que leurs dates de validité.

Pour obtenir la prise en compte d'une demande d'utilisation d'une carte prépayée, l'utilisateur de carte prépayée CPP se connecte au serveur qui sollicite une autorisation au processeur de sécurité. En cas d'accord, cette demande d'utilisation est accordée. Ce peut être par exemple l'accord d'une communication avec un autre terminal.

Dans le procédé selon l'invention, on associe à chaque carte prépayée un numéro "de version", stocké dans la base de données du serveur. Ce numéro n'est pas stocké au niveau de la carte, ce qui allongerait la séquence à rentrer. La séquence d'authentification associée dépend de ce numéro de version, qui est incrémenté lorsque la carte est vide ou périmée. Il est donc impossible à un utilisateur détenteur d'une carte vide ou périmée de réutiliser son numéro de carte, même si le numéro de série de cette carte correspond à un nouveau crédit positif, parce que la séquence a été modifiée.

Pour chaque carte la base de données du serveur contient les informations suivantes : numéro de série, numéro de version, le nouveau crédit et la nouvelle date de validité. La base de données est constituée de telle sorte qu'elle permette de retrouver ces informations à partir du numéro de série. Le numéro de version n'est présent que dans le serveur.

Lors d'une demande d'utilisation le serveur soumet au processeur de sécurité le numéro de série, le numéro de version et la séquence d'authentification (certificat ou authentifiant) . Ce processeur de sécurité recalcule cette séquence (certificat ou authentifiant) et, comme précédemment, accorde la connexion à l'utilisateur si cette séquence est valide. Il est à noter qu'aucune base n'est stockée dans le processeur de sécurité.

Dans le procédé de prise en compte d'une demande d'utilisation d'une carte prépayée selon l'invention, on a donc les étapes suivantes :
- un utilisateur d'une carte prépayée se connecte à un serveur contenant une base de données des numéros de série, qui servent à repérer les cartes prépayées, des crédits restant à consommer, des dates de validité de ces cartes, ainsi que de numéros de version associés à chaque carte, qui sont incrémentés lorsque les cartes correspondantes sont vides ou périmées ;
- cet utilisateur s'authentifie auprès du serveur en lui communiquant une séquence d'authentification constituée :
   - soit (cas 1) d'un numéro de série et d'un certificat (cartes prépayées virtuelles immatérielles ou cartes prépayées virtuelles matérielles émettant des séquences fixes),
   - soit (cas 2) d'un numéro de série et d'un authentifiant (cartes prépayées virtuelles immatérielles émettant des séquences différentes à chaque utilisation) ;
- le serveur retrouve le numéro de version à partir du numéro de série ;
- ce serveur fournit la séquence d'authentification et ledit numéro de version à un processeur de sécurité ayant la capacité de recalculer la séquence, qui est dépendante du numéro de version, et de vérifier la validité de celle-ci ;
- en cas de validité de la séquence, ce processeur transmet au serveur une autorisation de consommer ;
- après réception de cette autorisation le serveur donne son accord à la demande d'utilisation, dans la limite du crédit restant sur la carte et de la date de validité de celle-ci.

Avantageusement le procédé est tel que :
- dans le cas 1 le certificat est calculé par application d'un « algorithme cryptographique » au numéro de série, au numéro de version et à une clé secrète mère ;
- dans le cas 2 la clé secrète fille est calculé par application d'un « algorithme cryptographique » au numéro de série, au numéro de version et à une clé secrète mère. C'est cette clé fille qui permet de calculer l'authentifiant comme cela a été expliqué plus haut.

Le procédé de l'invention fonctionne de la manière suivante :
a) Au départ le numéro de version, stocké dans la base de donnée du serveur, vaut zéro.
b) Le calcul du certificat ou de la clé secrète fille est réalisé lors de la création d'une carte prépayée virtuelle. On constitue ainsi la séquence de symboles fixe d'authentification dans le cas 1 ou, dans le cas 2, la clé secrète fille qui sera introduite dans la carte prépayée virtuelle matérielle.
c) Puis à chaque utilisation le numéro de version de la carte prépayée virtuelle, qui est stocké dans la base de donnée du serveur est communiqué au processeur de sécurité qui vérifie le certificat (cas 1) ou l'authentifiant (cas 2). Dans le cas 2 le processeur de sécurité doit calculer au préalable la clé secrète fille nécessaire à la vérification de l'authentifiant.
d) Lorsque la carte n'est plus valide (crédit épuisé ou date de validité dépassée) on peut créer comme en b) un nouvelle carte prépayée virtuelle ayant le même numéro de série en incrémentant le numéro de version. La nouvelle carte prépayée virtuelle sera utilisée comme en c).

Bien qu'ayant le même numéro de série l'ancienne carte prépayée virtuelle ne pourra plus être utilisée puisque son certificat (ou sa clé secrète) est différente du certificat (ou de la clé secrète) de la nouvelle carte prépayée virtuelle ; en effet, le numéro de version qui a changé intervient dans le calcul du certificat ou de la clé secrète.

Le procédé de l'invention permet la prise en compte d'une demande d'utilisation qui peut être par exemple celle d'une connexion à un service (par exemple un service après vente), celle d'un achat (à distance ou non), et enfin, celle d'une connexion téléphonique.

Les liaisons entre utilisateur, serveur et processeur peuvent être des liaisons téléphoniques, mais elles peuvent également être tout autre type de liaison, par exemple de type informatique (de type Internet par exemple).

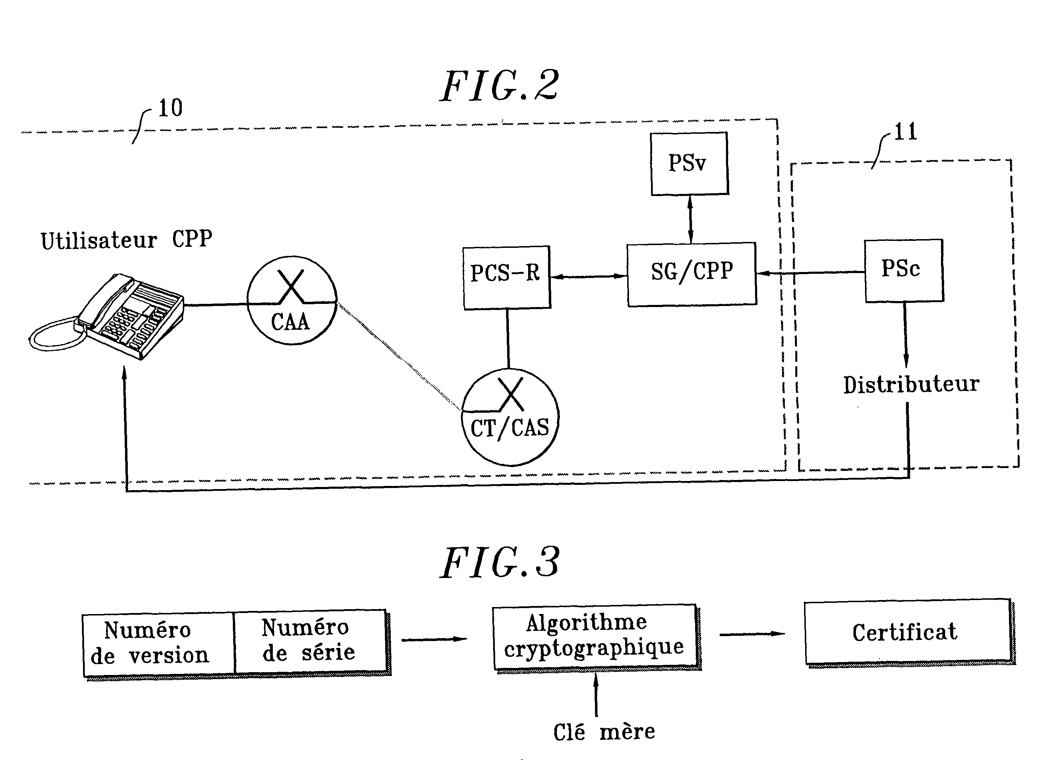

La figure 2 donne un exemple d'utilisation de la carte prépayée dans le réseau intelligent de France Télécom.

Sur cette figure sont utilisées les appellations suivantes :
- CPP :: Carte prépayée.
- CAA :: Centre à Autonomie d'Acheminement.
- CT/CAS :: Centre de Transit avec fonction Commutateur d'Accès au Service.
- PCS-R :: Point de Commande des Services-Réseau.
- SG/CPP :: Système de Gestion des Cartes prépayées.
- PSv :: Processeur de sécurité de vérification des cartes prépayées.
- PSc :: Processeur de Sécurité de création des cartes prépayées.

Le bloc 10 illustre les flux de données en temps réel entre l'utilisateur et le serveur.

Le bloc 11 illustre la procédure de création de cartes prépayées en temps différé.

Le module SG/CPP, qui correspond au serveur de la figure 1, contient la base de données de numéros de série des cartes prépayées, des crédits restant à consommer sur celles-ci, ainsi que leurs dates de validité, et les numéros de version.

Le module Psv correspond au processeur de sécurité de la figure 1.

Les modules CAA et CT/CAS font partie du réseau France Télécom.

l'utilisateur présente son numéro de carte qui par la voie CAA - CT/CAS - PCS-R arrive au SG/CPP qui, après consultation de sa base de données et consultation du PSv, donne son accord pour la fourniture de service demandé.

La figure 3 donne un schéma décrivant la réutilisation d'une carte prépayée avec le recalcul du certificat correspondant à une carte, en partant des numéros de série et de version et en utilisant un algorithme cryptographique employant une clé de calcul dite "clé mère", tel que celui décrit dans le document référencé [2].

Dans le cas des cartes prépayées virtuelles matérielles émettant une séquence variable :

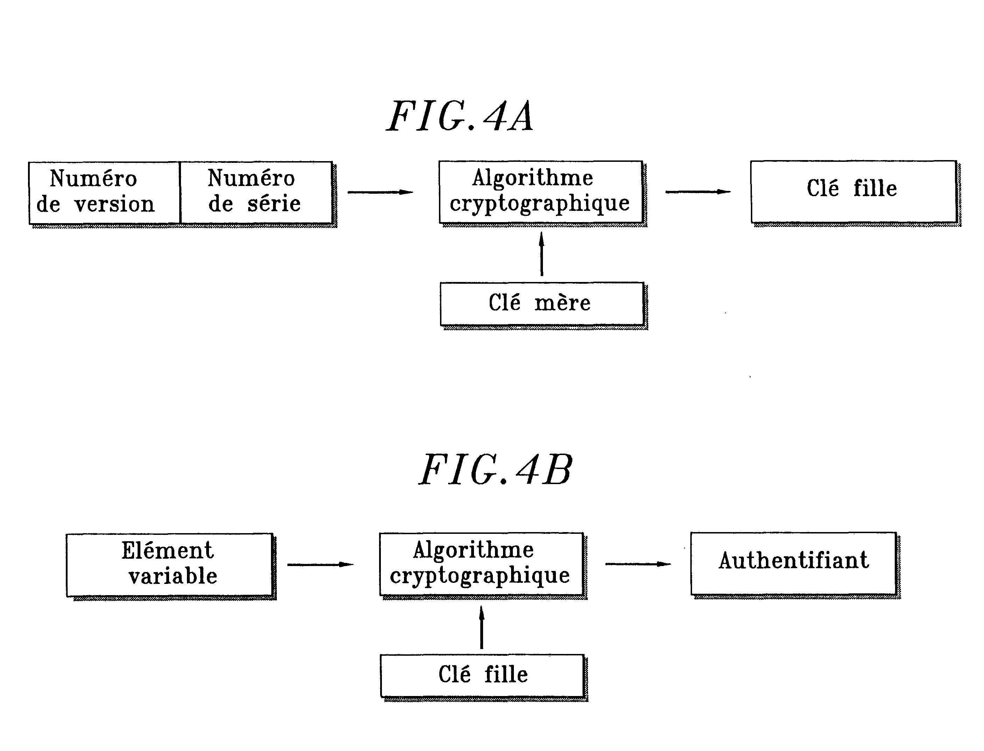

- la figure 4A illustre le calcul par l'algorithme cryptographique de la clé fille à partir du numéro de série, du numéro de version et de la clé mère ;
- la figure 4B illustre le calcul par l'algorithme cryptographique de l'authentifiant à partir de l'élément variable et de la clé fille.

### REFERENCES

[1] US-A-4 601 011 (GRYNBERG)
[2] « Applied Cryptography » de Bruce Schneir (John Wiley & Son, seconde édition, partie 3, chapitre 3 (« Data Encryption Standard »), chapitre 13 (« Other Bloc Ciphers »), pages 265 à 328)

## Revendications

1. Procédé de prise en compte d'une demande d'utilisation d'une carte prépayée virtuelle permettant la réutilisation des numéros de série, comportant les étapes suivantes :
- un utilisateur d'une carte prépayée virtuelle se connecte à un serveur contenant une base de données de numéros de série, qui servent à repérer les cartes prépayées, de crédits restant à consommer et de dates de validité de ces cartes ;
- cet utilisateur s'authentifie auprès du serveur en lui communiquant une séquence d'authentification ;
- ce serveur fournit cette séquence à un processeur de sécurité ayant la capacité de vérifier la validité de celle-ci ;
- en cas de validité de celle-ci, ce processeur transmet au serveur une autorisation de consommer ;
- après réception de cette autorisation le serveur donne son accord à la demande d'utilisation, dans la limite du crédit restant sur la carte et de la date de validité de celle-ci ;
ce procédé étant **caractérisé en ce que**, lors d'une demande d'utilisation, le serveur fournit au processeur de sécurité, en plus de la séquence d'authentification, un numéro de version, associé à chaque carte, qui est incrémenté lorsque la carte est vide ou périmée, et qui est stocké dans la base de données du serveur ; et, **en ce que** ce processeur recalcule la séquence d'authentification, qui est dépendante du numéro de version, avant de vérifier sa validité.

2. Procédé selon la revendication 1, **caractérisé en ce que** la séquence d'authentification est fixe et constituée d'un numéro de série et d'un certificat.

3. Procédé selon la revendication 2, **caractérisé en ce que** le certificat est calculé par application d'un « algorithme cryptographique » au numéro de série, au numéro de version et à une clé secrète mère.

4. Procédé selon la revendication 2, **caractérisé en ce qu'**il comporte les étapes suivantes :
a) Au départ le numéro de version, stocké dans la base de donnée du serveur, vaut zéro.
b) Le calcul du certificat est réalisé lors de la création d'une carte prépayée virtuelle ; on constitue ainsi la chaîne fixe d'authentification qui sera introduite dans la carte prépayée virtuelle matérielle.
c) Puis à chaque utilisation le numéro de version de la carte prépayée virtuelle, qui est stocké dans la base de donnée du serveur est communiqué au processeur de sécurité qui vérifie le certificat.
d) Lorsque la carte n'est plus valide on peut créer comme en b) un nouvelle carte prépayée virtuelle ayant le même numéro de série en incrémentant le numéro de version ; la nouvelle carte prépayée virtuelle étant utilisée comme en c).

5. Procédé selon la revendication 1, **caractérisé en ce que** la séquence d'authentification est variable et constituée d'un numéro de série et d'un authentifiant.

6. Procédé selon la revendication 5, **caractérisé en ce qu'**une clé secrète fille qui permet de calculer l'authentifiant est calculée par application d'un « algorithme cryptographique » au numéro de série, au numéro de version et à une clé secrète mère.

7. Procédé selon la revendication 6, **caractérisé en ce qu'**il comporte les étapes suivantes :
a) Au départ le numéro de version, stocké dans la base de donnée du serveur, vaut zéro.
b) Le calcul de la clé secrète fille est réalisé lors de la création d'une carte prépayée virtuelle ; on constitue ainsi la clé secrète fille qui sera introduite dans la carte prépayée virtuelle matérielle.
c) Puis à chaque utilisation le numéro de version de la carte prépayée virtuelle, qui est stocké dans la base de donnée du serveur est communiqué au processeur de sécurité qui vérifie l'authentifiant, le processeur de sécurité devant calculer au préalable la clé secrète fille nécessaire à la vérification de l'authentifiant.
d) Lorsque la carte n'est plus valide on peut créer comme en b) une nouvelle carte prépayée virtuelle ayant le même numéro de série en incrémentant le numéro de version ; la nouvelle carte prépayée virtuelle étant utilisée comme en c).

8. Procédé selon la revendication 1, **caractérisé en ce que** la carte prépayée est une carte téléphonique prépayée, et **en ce que** la demande d'utilisation est celle d'une connexion téléphonique.

## Claims

1. Process for the acceptance of a use request of a virtual prepaid card permitting the reuse of serial numbers, involving the following stages:
- a user of a virtual prepaid card is connected to a server containing a data base of serial numbers used for locating prepaid cards, remaining credits to be consumed and the validity dates of said cards,
- said user obtains authentication from the server by communicating thereto an authentication sequence,
- said server supplies said sequence to a security processor having the capacity to check the validity thereof,
- in the case of the validity thereof, the processor transmits a consumption authorization to the server,
- after receiving said authorization, the server gives its agreement to the use request, within the credit limits remaining on the card and the validity date thereof,
wherein during a use request, the server supplies the security processor with, besides the authentication sequence, a version number associated with each card, which is incremented when the card is empty or obsolete and which is stored in the server data base and wherein said processor recalculates the authentication sequence, which is dependent on the version number, prior to checking its validity.

2. Process according to claim 1, wherein the authentication sequence is fixed and constituted by a serial number and a certificate.

3. Process according to claim 2, wherein the certificate is calculated by applying a "cryptographic algorithm" to the serial number, to the version number and to a secret mother key.

4. Process according to claim 2, which comprises the following stages:
a) initially the version number stored in the server data base is zero,
b) the calculation of the certificate takes place during the creation of a virtual prepaid card, thus forming the fixed authentication chain which will be introduced into the material, virtual prepaid card,
c) then for each use the version number of the virtual prepaid card, which is stored in the server data base, is communicated to the security processor, which checks the certificate,
d) when the card is no longer valid, it is possible to create, as in b), a new virtual prepaid card having the same serial number by incrementing the version number, the new virtual prepaid card being used as in c).

5. Process according to claim 1, wherein the authentication sequence is variable and constituted by a serial number and an authenticator.

6. Process according to claim 5, wherein a secret daughter key, which makes it possible to calculate the authenticator, is calculated by applying a "cryptographic algorithm" to the serial number, to the version number and to a secret mother key.

7. Process according to claim 6, which comprises the following stages:
a) initially the version number stored in the server data base is zero,
b) the calculation of the secret daughter key takes place during the creation of a virtual prepaid card, thus forming the secret daughter key, which will be introduced into the material, virtual prepaid card,
c) then for each use the version number of the virtual prepaid card, which is stored in the server data base, is communicated to the security processor, which checks the authenticator, the security processor having to calculate beforehand the secret daughter key necessary for checking the authenticator,
d) when the card is no longer valid, it is possible to create, as in b), a new virtual prepaid card with the same serial number by incrementing the version number, the new virtual prepaid card being used as in c).

8. Process according to claim 1, wherein the prepaid card is a prepaid phone card and wherein the use request is that of a phone connection.

## Patentansprüche

1. Verfahren zur Berücksichtigung einer Benutzungsanforderung für eine vorausbezahlte virtuelle Karte, welche die Wiederverwendung der Seriennummern erlaubt, mit folgenden Schritten:
- ein Benutzer einer vorausbezahlten virtuellen Karte stellt eine Verbindung zu einem Server her, der eine Datenbasis von Seriennummern enthält, welche dazu dienen, die vorausbezahlten Karten, zum Verbrauch verbleibende Guthaben und Gültigkeitsdaten dieser Karten festzustellen;
- dieser Benutzer authentifiziert sich gegenüber dem Server, indem er ihm eine Authentisierungs-Sequenz übermittelt;
- der Server liefert diese Sequenz an einen Sicherheitsprozessor, der in der Lage ist, deren Gültigkeit zu prüfen;
- im Fall von deren Gültigkeit übermittelt der Prozessor dem Server eine Benutzungserlaubnis;
- nach Empfang dieser Erlaubnis gibt der Server seine Zustimmung zu der Benutzungsanforderung innerhalb der Grenze des auf der Karte verbleibenden Guthabens und deren Gültigkeitsdatums;
wobei das Verfahren **dadurch gekennzeichnet ist,**
**dass** bei einer Benutzungsanforderung der Server dem Sicherheitsprozessor zusätzlich zur Authentisierungssequenz eine mit einer jeden Karte verbundene Versionsnummer liefert, die inkrementiert wird, wenn die Karte leer oder verfallen ist, und die in der Datenbank des Servers gespeichert ist; und
**dass** der Prozessor die Authentisierungssequenz, welche von der Versionsnummer abhängig ist, vor der Prüfung ihrer Gültigkeit neu berechnet.

2. Verfahren nach Anspruch 1, **dadurch gekennzeichnet, dass** die Authentisierungssequenz festgelegt ist und aus einer Seriennummer und einem Zertifikat besteht.

3. Verfahren nach Anspruch 2, **dadurch gekennzeichnet, dass** das Zertifikat durch Anwendung eines "kryptographischen Algorithmus'' auf die Seriennummer, auf die Versionsnummer und auf einen Muttergeheimschlüssel berechnet wird.

4. Verfahren nach Anspruch 2, **dadurch gekennzeichnet, dass** es die folgenden Schritte umfasst:
a) Am Anfang hat die in der Datenbank des Servers gespeicherte Versionsnummer den Wert Null.
b) Die Berechnung des Zertifikats wird während der Erstellung einer vorausbezahlten virtuellen Karte durchgeführt; so bildet man die festgelegte Authentifizierungskette, die in die vorausbezahlte virtuelle, materielle Karte eingegeben wird.
c) Danach wird bei jeder Benutzung die in der Datenbank des Servers gespeicherte Versionsnummer der vorausbezahlten virtuellen Karte dem Sicherheitsprozessor übermittelt, der das Zertifikat prüft.
d) Wenn die Karte nicht mehr gültig ist, kann man gemäß b) eine neue vorausbezahlte virtuelle Karte erstellen, welche die gleiche Seriennummer hat, indem die Versionsnummer inkrementiert wird; die neue vorausbezahlte virtuelle Karte wird wie unter c) benutzt.

5. Verfahren nach Anspruch 1, **dadurch gekennzeichnet, dass** die Authentisierunssequenz veränderlich ist und aus einer Seriennummer und einer Authentifizierung besteht.

6. Verfahren nach Anspruch 5, **dadurch gekennzeichnet, dass** ein Tochtergeheimschlüssel, der eine Berechnung der Authentifizierung ermöglicht, durch Anwendung eines "kryptographischen Algorithmus" auf die Seriennummer, auf die Versionsnummer und auf einen Muttergeheimschlüssel berechnet wird.

7. Verfahren nach Anspruch 6, **dadurch gekennzeichnet, dass** es die folgenden Schritte umfasst:
a) Am Anfang hat die in der Datenbank des Servers gespeicherte Versionsnummer den Wert Null.
b) Die Berechnung des Tochtergeheimschlüssels wird während der Erstellung einer vorausbezahlten virtuellen Karte durchgeführt; so bildet man den Tochtergeheimschlüssel, der in die vorausbezahlte virtuelle, materielle Karte eingegeben wird.
c) Danach wird bei jeder Benutzung die in der Datenbank des Servers gespeicherte Versionsnummer der vorausbezahlten virtuellen Karte dem Sicherheitsprozessor übermittelt, der die Authentifizierung prüft, wobei der Sicherheitsprozessor zuvor den zur Prüfung der Authentifizierung notwendigen Tochtergeheimschlüssel berechnen muß.
d) Wenn die Karte nicht mehr gültig ist, kann man gemäß b) eine neue vorausbezahlte virtuelle Karte erstellen, welche die gleiche Seriennummer hat, indem die Versionsnummer inkrementiert wird; die neue vorausbezahlte virtuelle Karte wird wie unter c) benutzt.

8. Verfahren nach Anspruch 1, **dadurch gekennzeichnet, dass** die vorausbezahlte Karte eine vorausbezahlte Telefonkarte ist und dass die Benutzungsanforderung die einer Telefonverbindung ist.
